# EUROPÄISCHE PATENTSCHRIFT

(11) **EP 2 715 178 B1**
(45) Veröffentlichungstag und Bekanntmachung des Hinweises auf die Patenterteilung: **18.11.2015**
(21) Anmeldenummer: 12728948.6
(22) Anmeldetag: 04.05.2012
(51) Int. Cl.: F16D 48/02

(54) **VORRICHTUNG ZUR SCHWINGUNGSDÄMPFUNG UND DREHMOMENTBEGRENZUNG**
DEVICE FOR DAMPING VIBRATIONS AND LIMITING TORQUE
DISPOSITIF DESTINÉ À AMORTIR DES VIBRATIONS ET À LIMITER LE COUPLE

(30) Priorität: 31.05.2011 DE 102011103742
(43) Veröffentlichungstag der Anmeldung: 09.04.2014
(73) Patentinhaber: Schaeffler Technologies AG & Co. KG, 91074 Herzogenaurach (DE)
(72) Erfinder: BERTHELEMY, Pierre-Yves, F-67460 Souffelweyersheim (FR)
(86) Internationale Anmeldenummer: PCT/DE2012/000456
(87) Internationale Veröffentlichungsnummer: WO 2012/163318

(56) Entgegenhaltungen:
- EP-A2- 1 722 108
- WO-A1-2011/127887
- DE-A1- 10 006 542
- DE-A1-102005 021 743
- DE-A1-102008 003 991
- DE-A1-102009 004 705

## Beschreibung

Die Erfindung bezieht sich auf eine Vorrichtung zur Dämpfung von Druckschwingungen und Drehmomentbegrenzung innerhalb einer hydraulischen Strecke zur Kupplungsbetätigung eines Fahrzeugs.

Schwingungen werden vom Verbrennungsmotor eines Kraftfahrzeugs auf die Kupplung übertragen. Von dieser ausgehend werden die Schwingungen über das Ausrücksystem bis hin zum Ausrückpedal bzw. Kupplungspedal weiter geleitet und kommen dort ggf. sogar vergrößert an. Zur Reduzierung der Schwingungsamplituden der übertragenen Schwingungen werden Schwingungstilger verwendet, die nach dem Prinzip eines Helmholtz-Resonators arbeiten und eine Schwingung in einem bestimmten Frequenzbereich um die Resonanzfrequenz herum dämpfen.

Aus der DE 10 2008 003 991 A1 ist eine Lösung zur Unterdrückung von Eigenresonanzen in einer hydraulischen Strecke zur Kupplungsbetätigung eines Kraftfahrzeuges bekannt, bei der ein besonders ausgestatteter Helmholtz-Resonator verwendet wird. Dieser besteht aus einem Leitungsstück, das mit einem von diesem abzweigenden Behälter verbunden ist. Die aus einem T-Stück gebildete Verzweigung ermöglicht, den Helmholtz-Resonator mit dem Ausrücksystem zu verbinden. Das Ausrücksystem besteht bekanntermaßen im Wesentlichen aus einem Geber- und einem Nehmerzylinder, die mittels einer Druckleitung miteinander verbunden sind. Die Druckleitung ist ihrem Volumen entsprechend mit Hydraulikfluid gefüllt und fungiert als Speicher für die kinetische Energie. Der als Druckspeicher fungierende Behälter hat die Funktion eines federnden Elements mit einer bestimmten hydraulischen Kapazität. Er speichert damit die potentielle Energie. Die Abmessungen der Druckleitung und die hydraulische Kapazität des Behälters sollen nach der erfinderischen Lösung so abgestimmt werden, dass die Eigenfrequenz des Helmholtz-Resonators der zu filternden Frequenz im Ausrücksystem entspricht.

Diese Helmholtz-Resonatoren können sehr effektiv ein bestimmtes Frequenzband filtern und damit tilgen, wodurch die Vibration am Pedal und die Geräusche während der Kupplungsbetätigung stark reduziert werden.

Ein weiteres Problem bei der Betätigung einer Kupplung in einem hydraulischen System für eine Kupplungsbetätigung eines Kraftfahrzeugs besteht darin, dass beim schnellen Einkuppeln, insbesondere beim Abrutschen des Fahrers vom Ausrückpedal bzw. Kupplungspedal, hohe Drehmomente im Getriebe entstehen können, die direkt abhängig von der Einkuppelgeschwindigkeit sind. Bei zu schnellem Schließen der Kupplung können die entstehenden Momente, insbesondere beim Anfahren, zu einer Beschädigung oder Zerstörung des Getriebes führen. Daher ist es wünschenswert, die mögliche Geschwindigkeit beim Einkuppeln zu begrenzen. Andererseits soll die Kupplungsbetätigung beim Ausrücken, d. h. beim Treten des Kupplungspedals für den Nutzer des Kraftfahrzeugs komfortabel und auch bei unterschiedlichen Temperaturen mit vergleichbarem Kraftaufwand möglich sein. Daher sollte der Durchflusswiderstand im hydraulischen System während des Einkuppelns einen bestimmten Wert nicht unterschreiten, während beim Auskuppeln ein niedriger Durchflusswiderstand im hydraulischen System zur Vermeidung von erhöhtem Auskuppelwiderstand, insbesondere bei niedrigen Temperaturen und damit zähflüssigerer Hydraulikflüssigkeit im System, vermieden werden soll.

Daher werden so genannte Drehmomentbegrenzer (Peak-Torque-Limiter, PTL) im hydraulischen System eingesetzt, die je nach Durchflussrichtung des Hydraulikfluids im hydraulischen System unterschiedliche Durchflusswiderstände aufweisen. Diese werden oft in Reihe mit einem Druckschwingungsdämpfer in der hydraulischen Leitung angeordnet, um so die maximalen Drehmomente beim Einkuppeln zu begrenzen.

Durch die Anordnung von Schwingungsdämpfern und Drehmomentbegrenzern in der hydraulischen Leitung entsteht daher die Notwendigkeit, mehrere Leitungsstücke vom Geberzylinder über den Schwingungsdämpfer und den Drehmomentbegrenzer mit dem Nehmerzylinder zu verbinden. Die dadurch notwendige hohe Anzahl von Konnektoren und Leitungsstücken erhöht die Kosten für das hydraulische System. Darüber hinaus kann es problematisch werden, die Gehäuse der unterschiedlichen Bauteile im Motorraum anzuordnen.

Es besteht daher ein Bedarf, eine Vorrichtung zur Schwingungsdämpfung und Drehmomentbegrenzung zur Verfügung zu stellen, die mit einer möglichst geringen Anzahl von Konnektoren und mit geringem Bauraum auskommt. Die Lösung dieser Aufgabe gelingt mit einer Vorrichtung zur Dämpfung von Schwingungen und Drehmomentbegrenzung nach Anspruch 1. Vorteilhafte Weiterbildungen ergeben sich aus den Unteransprüchen.

Eine erfindungsgemä0ße Vorrichtung zur Dämpfung von Schwingungen und Drehmomentbegrenzung weist ein Gehäuse auf, in den ein Kanal mit vorbestimmter Länge zur Erzeugung eines Helmholtz-Resonators zur Dämpfung von Schwingungen ausgebildet wird. Im Inneren des Gehäuses befindet sich ein Einsatz, der als Verbindung zwischen dem Kanal des Helmholtz-Resonators und der hydraulischen Strecke dient und über Öffnungen zum Helmholtz-Resonator-Kanal verfügt. Im Inneren des Einsatzes ist ein Druckraum ausgebildet, der eine Druckraumwandung und wenigstens zwei Öffnungen in der Druckraumwandung zum Ein - und Ausströmen des hydraulischen Fluids in bzw. aus dem Druckraum aufweist. Der Druckraum ist dabei in der hydraulischen Strecke angeordnet und wird beim Betätigen und Loslassen des Kupplungspedals vom hydraulischen Fluid durchströmt. Im Inneren des Druckraums befindet sich eine Blende, die dazu ausgebildet ist, durch das hindurch strömende Fluid bewegt zu werden. Dabei weist die Blende in ihrer Bewegung zwei Endstellungen auf, die im nachfolgenden als Schaltstellungen bezeichnet werden. Die Blende weist dabei mindestens zwei Blendenöffnungen auf, es ist aber auch durchaus möglich, eine Mehrzahl von Blendenöffnungen vorzusehen. Die Blende ist dabei so angeordnet, dass sie in einer Schaltstellung, der Einkuppelschaltstellung, in Anlage mit der Druckraumwandung gelangt und zwar derart, dass wenigstens eine der Blendenöffnungen relativ zur Druckraumwandungsöffnung von der Druckraumwandung abgetrennt, bzw. verschlossen wird. In der zweiten Schaltstellung, der Auskuppelschaltung hingegen, sind die Blendenöffnungen geöffnet, so dass sich ein im Vergleich zur ersten Schaltstellung erheblich geringerer Durchflusswiderstand ergibt.

Wenn nun der Benutzer des Kraftfahrzeugs das Kupplungspedal betätigt, so wird die Blende durch das durch den Druckraum hindurch strömende Fluid in die Auskuppelschaltstellung bewegt und der Gesamtdurchflusswiderstand der Drehmomentbegrenzungsvorrichtung ist niedrig. Lässt der Besitzer des Kraftfahrzeugs dagegen das Kupplungspedal zurück schwenken, so wird die Blende durch das nun in entgegen gesetzter Richtung durch den Druckraum hindurch strömende Fluid in die Einkuppelschaltstellung bewegt, und ein Teil der Blendeöffnungen wird abgedeckt. Dadurch steigt der Durchflusswiderstand der Drehmomentbegrenzungsvorrichtung an und die Einkuppelgeschwindigkeit und damit das in der Kupplung und im Getriebe auftretende Drehmoment werden begrenzt.

Weitere Vorteile, Merkmale, Merkmalskombinationen und Eigenschaften der vorliegenden Erfindung werden erläutert anhand eines Ausführungsbeispiels und den Figuren.
- Figur 1: zeigt eine Schnittdarstellung durch eine erfindungsgemäße Vorrichtung zur Dämpfung von Schwingungen und zur Drehmomentbegrenzung;
- Figur 2: zeigt den inneren Gehäuseeinsatz mit der Drehmomentbegrenzungsvorrichtung im Detail.

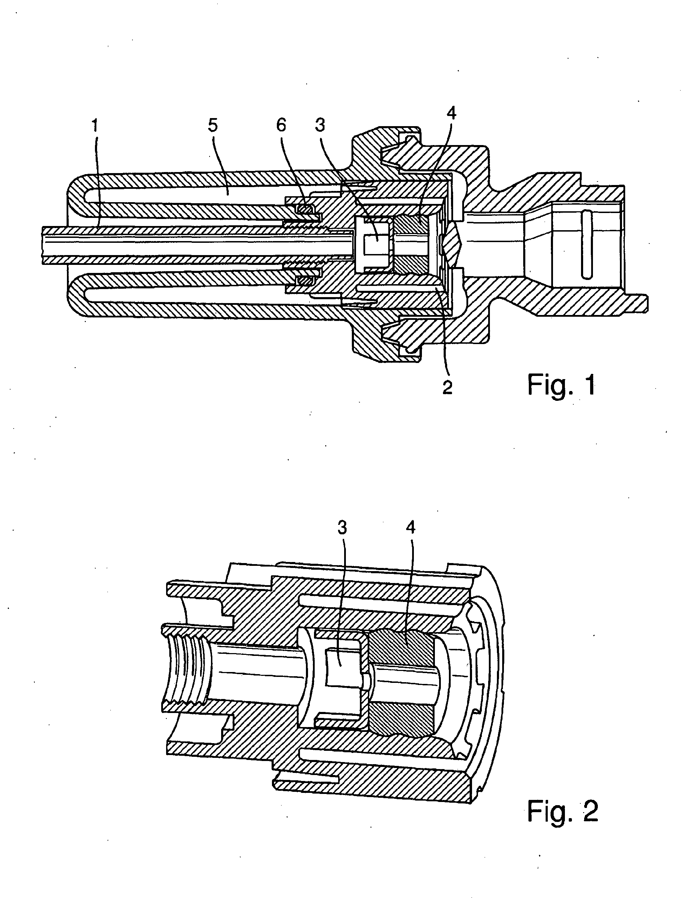

Figur 1 zeigt eine erfindungsgemäße Vorrichtung zur Schwingungsdämpfung und Drehmomentbegrenzung in einer Schnittdarstellung. Die Vorrichtung zur Schwingungsdämpfung und Drehmomentbegrenzung ist mit einer hydraulischen Leitung 1 verbunden und weist auf ihrer rechten Seite ein Aufnahme für einen Konnektor auf, mittels derer sie mit einer weiteren Druckleitung verbunden werden kann. Im Inneren der Vorrichtung zur Schwingungsdämpfung und Drehmomentbegrenzung befindet sich ein Einsatz 2, der mit der Fluidleitung 1 verbunden ist. Die Verbindung kann hierbei stoffschlüssig, formschlüssig oder kraftschlüssig ausgeführt sein, beispielsweise durch Schweißen, Klemmen, Klipsen, usw.. An den Einsatz 2 schließt sich ein Gehäuse 5 an, in dem ein Kanal zur Ausbildung eines Helmholtz-Resonators ausgebildet ist. Die Abdichtung zwischen dem Gehäuse 5 und dem Einsatz 2 erfolgt über den Dichtring 6, der zwischen Gehäuse 5 und Einsatz 2 angeordnet ist. Der Kanal im Gehäuse 5 ist über Öffnungen im Einsatz 2, die in der Zeichnung nicht dargestellt sind, in Verbindung mit dem Innenraum des Einsatzes 2 und somit mit der Fluidmittelleitung 1 und dem Konnektorbereich auf der rechten Seite in Verbindung.

Im Inneren des Einsatzes 2 befindet sich ein vergrößerter Innenraum, der einen größeren Durchmesser als die Fluidleitung 1 aufweist. In diesem Innenraum ist eine Blende 3 und ein Einpressteil 4 angeordnet, wobei das Einpressteil 4 eine Öffnung aufweist. Die Blende 3 weist eine Form auf, die im Wesentlichen dosen- bzw. kreiszylinderförmig ist, wobei die Dosen- bzw. Kreiszylindergrundfläche auf der linken Seite offen und auf der rechten Seite geschlossen ist. Die Dosen- bzw. Kreiszylindergrundfläche auf der rechten Seite weist eine mittige Bohrung zur Bildung einer Blendenöffnung auf, die einen erheblich geringeren Durchmesser als die Bohrung im Einpresskörper 4 und der Innendurchmesser der Leitung 1 aufweist. In der Mantelfläche der Blende 3 finden sich Ausnehmungen, die sich bis in die rechte Grundfläche hinein erstrecken, aber vom Mittelpunkt der rechten Grundfläche einen größeren Abstand als der Radius der Bohrung im Einpressteil 4 aufweisen.

Wenn nun der Nutzer des Kraftfahrzeugs zum Einkuppeln auf das Kupplungspedal tritt, findet ein Fluidfluss von der rechten Seite der Vorrichtung zur Schwingungsdämpfung und Drehmomentbegrenzung zur Druckmitteleitung 1 auf der linken Seite statt. Dabei entsteht ein Druckabfall an der Blendenöffnung 3, der eine resultierende, vom Einpresskörper 4 wegzeigende Druckkraft auf die Blende 3 verursacht. Dadurch wird die Blende 3 vom Einpresskörper 4 weggeschoben, bis die Enden der Zylindermantelfläche an der gegenüber liegenden Innenraumwandung des Einsatzes 2 anstoßen. Da sich die Grundfläche der Blende 3 nun nicht mehr in Anlage Einpresskörper 4 befindet, sind die außen liegenden Öffnungen in der Grundfläche Blende 3 nicht mehr durch den Anpresskörper 4 verschlossen und der Durchflusswiderstand sinkt ab.

Wenn nun der Kraftfahrzeugnutzer den Gang eingelegt hat und das Kupplungspedal zurück schwenken lässt, findet ein gegensätzlicher Fluidstrom von link nach rechts durch die Vorrichtung zur Schwingungsdämpfung und Drehmomentbegrenzung statt. An der Blende 3 tritt wiederum ein Druckabfall auf, der dieses Mal eine zum Einpresskörper 4 hingerichtete Druckkraft auf die Blende 3 zür Folge hat. Dadurch wird die Blende 3 zum Einpresskörper 4 hin bewegt, bis die rechte Grundfläche der Blende 3 in Anlage mit dem Einpresskörper 4 kommt und derart die außen liegenden Blendenöffnungen verschlossen werden. Der Durchflusswiderstand im Drehmomentbegrenzer steigt dadurch erheblich an, so dass die Geschwindigkeit, mit der das Fluid durch den Drehmomentbegrenzer fließen und somit die Kupplung wieder einkuppeln kann, begrenzt wird. Somit ist ein sicheres Einkuppeln zu jeder Zeit gewährleistet.

Es ist dabei möglich, die Blende noch mit einer Vorspannung zu versehen, so dass erst ab einer gewissen Einkuppelgeschwindigkeit der Drehmomentbegrenzer in die Begrenzerstellung geschaltet wird, so dass bei geringen Einkuppelgeschwindigkeiten keine Begrenzung der Durchflussgeschwindigkeit stattfindet.

Figur 2 zeigt noch einmal den Einsatz 2 mit dem Einpressteil 4 und der in Anlage befindlichen Blende 3, bei der die außen am Blendenrand liegenden Blendenöffnungen durch den Einpresskörper 4 verschlossen sind.

Da der Drehmomentbegrenzer im Inneren der Schwingungsdämpfungsvorrichtung angeordnet werden kann, wird kein zusätzlicher Bauraum und kein zusätzlicher Konnektor benötigt, so dass eine erheblich günstigere und einfachere Fertigung und Montage erfolgen kann.

### Bezugszeichenliste

- 1: Leitung
- 2: Einsatz
- 3: Blende
- 4: Einpresskörper
- 5: Gehäuse
- 6: Dichtring

## Patentansprüche

1. Einrichtung zur Dämpfung von Druckschwingungen und Drehmomentbegrenzung innerhalb einer hydraulischen Strecke zur Kupplungsbetätigung eines Kraftfahrzeuges mit einer von einem Fluid durchströmten Druckleitung (1) mit einem auf der Basis eines Helmholtz-Resonators arbeitenden, als Tilger ausgebildeten hohlzylindrischen, einen Kanal bildenden doppelwandigen Gehäuse (5), dessen endseitige Öffnung mit einem Deckel verschlossen ist, wobei im Gehäuse ein Einsatz (2) angeordnet ist, wobei der Einsatz einen inneren Druckraum mit einer Druckraumwandung aufweist, der von dem Fluid durchströmt wird und Öffnungen zum Ein- bzw. Ausströmen in der Druckraumwandung aufweist, wobei in dem Druckraum eine bewegliche Blende (3) angeordnet ist, die dazu ausgebildet ist, durch den Fluidstrom im Druckraum von zumindest einer Öffnung zu zumindest einer anderen Öffnung bewegt zu werden und dabei in Anlage mit der Druckraumwandung im Bereich von wenigstens einer Öffnung zu gelangen, und die Blende (3) wenigstens zwei Blendenöffnungen aufweist, wobei wenigstens eine Blendenöffnung bei Anlage der Blende (3) an die Druckraumwandung durch die Druckraumwandung verschlossen wird.

2. Einrichtung zur Dämpfung von Druckschwingungen und Drehmomentbegrenzung nach Anspruch 1, **dadurch gekennzeichnet, dass** der Druckraum durch den Einsatz (2) und ein Einsatzteil (4), das in den Einsatz eingesetzt wird, gebildet wird.

3. Einrichtung zur Dämpfung von Druckschwingungen und Drehmomentbegrenzung nach Anspruch 2, **dadurch gekennzeichnet, dass** das Einsatzteil (4) als Einpressteil ausgebildet und reibschlüssig im Presssitz im Einsatz (2) angeordnet ist.

4. Einrichtung zur Dämpfung von Druckschwingungen und Drehmomentbegrenzung nach einem der vorangehenden Ansprüche, **dadurch gekennzeichnet, dass** die Blende (3) in Abhängigkeit von der Durchflussrichtung des Fluids zwei Schaltstellungen aufweist, zwischen denen die Blende (3) hin- und herbewegt werden kann, wobei in der einen Schaltstellung wenigstens eine Blendenöffnung verschlossen ist und in der anderen Schaltstellung diese Blendenöffnung geöffnet ist.

5. Einrichtung zur Dämpfung von Druckschwingungen und Drehmomentbegrenzung nach einem der vorangehenden Ansprüche, **dadurch gekennzeichnet, dass** die Blende (3) mit einer Vorspannung beaufschlagt ist, die gegen eine Bewegungsrichtung gerichtet ist.

6. Einrichtung zur Dämpfung von Druckschwingungen und Drehmomentbegrenzung nach einem der vorangehenden Ansprüche, **dadurch gekennzeichnet, dass** die Blende (3) aus Stahl, insbesondere als Tiefziehbauteil, gefertigt ist.

7. Einrichtung zur Dämpfung von Druckschwingungen und Drehmomentbegrenzung nach einem der vorangehenden Ansprüche, **dadurch gekennzeichnet, dass** die Blende (3) eine im wesentlichen kreiszylinderförmige Form aufweist, wobei die eine Grundfläche eine Bohrung als erste Blendenöffnung aufweist, und die zweite Grundfläche mit einer größeren Bohrung oder vollständig offen ausgebildet ist, und in der Nähe des Umfangs der ersten Grundfläche weitere Blendenöffnungen ausgebildet sind, und bei Anlage der Blende an der Druckraumwand eine ringförmige Dichtfläche zwischen der Blende und der Dichtraumwandung ausgebildet wird, mittels der die weiteren Blendenöffnungen von der Öffnung in der Druckraumwandung abgedichtet werden, wobei die erste Blendenöffnung geöffnet bleibt.

## Claims

1. Device for damping pressure oscillations and limiting torque within a hydraulic path for clutch actuation in a motor vehicle, having a pressure line (1) through which a fluid flows and which has a double-walled housing (5), which housing operates on the basis of a Helmholtz resonator and is formed as a damper and is of hollow-cylindrical form and forms a duct, and the end-side orifice of which housing is closed off by way of a cover, wherein an insert (2) is arranged in the housing, wherein the insert has an inner pressure chamber with a pressure chamber wall, through which inner pressure chamber the fluid flows and which inner pressure chamber has orifices in the pressure chamber wall for the inflow and outflow, wherein, in the pressure chamber, there is arranged a movable baffle (3) which is designed to be moved by the fluid flow in the pressure chamber from at least one orifice to at least one other orifice and, in the process, to come into contact with the pressure chamber wall in the region of at least one orifice, and the baffle (3) has at least two baffle orifices, wherein, when the baffle (3) is in contact with the pressure chamber wall, at least one baffle orifice is closed by the pressure chamber wall.

2. Device for damping pressure oscillations and limiting torque, according to Claim 1, **characterized in that** the pressure chamber is formed by the insert (2) and by an insert part (4) which is inserted into the insert.

3. Device for damping pressure oscillations and limiting torque, according to Claim 2, **characterized in that** the insert part (4) is in the form of a press-in part and is arranged in the insert (2) in frictionally locking fashion with an interference fit.

4. Device for damping pressure oscillations and limiting torque, according to one of the preceding claims, **characterized in that** the baffle (3) has, in a manner dependent on the throughflow direction of the fluid, two switching positions between which the baffle (3) can be moved back and forth, wherein, in one switching position, at least one baffle orifice is closed, and in the other switching position, said baffle orifice is open.

5. Device for damping pressure oscillations and limiting torque, according to one of the preceding claims, **characterized in that** the baffle (3) is subjected to a preload directed counter to one movement direction.

6. Device for damping pressure oscillations and limiting torque, according to one of the preceding claims, **characterized in that** the baffle (3) is manufactured from steel, in particular as a deep-drawn component.

7. Device for damping pressure oscillations and limiting torque, according to one of the preceding claims, **characterized in that** the baffle (3) has a substantially circular cylindrical shape, wherein one base surface has a bore as a first baffle orifice, and the second base surface is formed with a larger bore or so as to be entirely open, and further baffle orifices are formed in the vicinity of the circumference of the first base surface, and when the baffle comes into contact with the pressure chamber wall, a ring-shaped sealing area is formed between the baffle and the sealing chamber wall, by means of which sealing area the further baffle orifices are sealed off from the orifice in the pressure chamber wall, wherein the first baffle orifice remains open.

## Revendications

1. Dispositif destiné à amortir des vibrations de pression et à limiter le couple de rotation à l'intérieur d'une section hydraulique destinée à actionner l'embrayage d'un véhicule automobile avec une conduite sous pression (1) parcourue par un fluide, avec un boîtier à double paroi (5) travaillant sur la base d'un résonateur de Helmholtz, de forme cylindrique creuse réalisé sous forme d'amortisseur et formant un canal, dont l'ouverture du côté de l'extrémité est fermée par un couvercle, dans lequel une pièce rapportée (2) est disposée dans le boîtier, dans lequel la pièce rapportée présente une chambre de pression intérieure avec une paroi de chambre de pression, qui est parcourue par le fluide et qui présente des ouvertures pour l'entrée et la sortie de l'écoulement dans la paroi de chambre de pression, dans lequel un écran mobile (3) est disposé dans la chambre de pression, lequel est conçu pour être déplacé par le courant de fluide dans la chambre de pression d'au moins une ouverture à au moins une autre ouverture et venir en l'occurrence s'appliquer sur la paroi de chambre de pression dans la région d'au moins une ouverture, et l'écran (3) présente au moins deux ouvertures d'écran, dans lequel au moins une ouverture d'écran est fermée par la paroi de chambre de pression lors de l'application de l'écran (3) sur la paroi de chambre de pression.

2. Dispositif destiné à amortir des vibrations de pression et à limiter le couple de rotation selon la revendication 1, **caractérisé en ce que** la chambre de pression est formée par la pièce rapportée (2) et une partie de pièce rapportée (4), qui est insérée dans la pièce rapportée.

3. Dispositif destiné à amortir des vibrations de pression et à limiter le couple de rotation selon la revendication 2, **caractérisé en ce que** la partie de pièce rapportée (4) est réalisée sous forme de pièce encastrée et est disposée en ajustement serré par friction dans la pièce rapportée (2).

4. Dispositif destiné à amortir des vibrations de pression et à limiter le couple de rotation selon l'une quelconque des revendications précédentes, **caractérisé en ce que** l'écran (3) présente, en fonction de la direction de circulation du fluide, deux positions de commutation, entre lesquelles l'écran (3) peut être déplacé en va et vient, dans lequel dans la première position de commutation au moins une ouverture d'écran est fermée et dans l'autre position de commutation cette ouverture d'écran est ouverte.

5. Dispositif destiné à amortir des vibrations de pression et à limiter le couple de rotation selon l'une quelconque des revendications précédentes, **caractérisé en ce que** l'écran (3) est soumis à une précontrainte, qui est dirigée contre une direction de mouvement.

6. Dispositif destiné à amortir des vibrations de pression et à limiter le couple de rotation selon l'une quelconque des revendications précédentes, **caractérisé en ce que** l'écran (3) est fabriqué en acier, en particulier sous la forme d'une pièce emboutie.

7. Dispositif destiné à amortir des vibrations de pression et à limiter le couple de rotation selon l'une quelconque des revendications précédentes, **caractérisé en ce que** l'écran (3) présente une forme essentiellement cylindrique circulaire, dans lequel la première face de base présente un alésage en tant que première ouverture d'écran, et la deuxième face de base est réalisée avec un alésage plus grand ou est entièrement ouverte, et d'autres ouvertures d'écran sont formées à proximité du pourtour de la première face de base et, lors de l'application de l'écran sur la paroi de chambre de pression, il se forme entre l'écran et la paroi de chambre de pression une face d'étanchéité annulaire, au moyen de laquelle les autres ouvertures d'écran sont rendues étanches par rapport à l'ouverture dans la paroi de chambre de pression, la première ouverture d'écran restant ouverte.
